# EUROPÄISCHE PATENTSCHRIFT

(11) **EP 3 370 892 B1**
(45) Veröffentlichungstag und Bekanntmachung des Hinweises auf die Patenterteilung: **04.09.2019**
(21) Anmeldenummer: 16791383.9
(22) Anmeldetag: 03.11.2016
(51) Int. Cl.: B21D 5/02, B21D 37/16, B21D 37/14

(54) **GREIFERSYSTEM FÜR EINE BIEGEPRESSE**
GRIPPER SYSTEM FOR A BENDING PRESS
SYSTÈME DE PRÉHENSION POUR PRESSE À PLIER

(30) Priorität: 04.11.2015 AT 509372015
(43) Veröffentlichungstag der Anmeldung: 12.09.2018
(73) Patentinhaber: TRUMPF Maschinen Austria GmbH & Co. KG., 4061 Pasching (AT)
(72) Erfinder: CAVICCHIA, Luigi, 10028 Trofarello (TO) (IT); TOMASIN, Fabio, 10098 Rivoli (TO) (IT); TONDA ROCH, Andrea, 10141 Torino (IT); VERONESE, Roberto, 10023 Chieri (TO) (IT); VIDOTTO, Giovanni, 10023 Chieri (TO) (IT)
(74) Vertreter: Burger, Hannes
(86) Internationale Anmeldenummer: PCT/EP2016/076585
(87) Internationale Veröffentlichungsnummer: WO 2017/076985

(56) Entgegenhaltungen:
- EP-A1- 2 913 114
- WO-A1-2013/166538
- AT-A4- 508 923
- AT-B1- 511 591
- AT-B1- 515 526
- JP-A- 2005 074 446
- US-A1- 2005 097 940

## Beschreibung

Die Erfindung betrifft ein Greifersystem für eine Biegepresse, sowie eine mit diesem ausgestattete Biegepresse, wie dies in den Ansprüchen 1 und 9 angegeben ist. Aus der AT 511 078 B1 ist ein Werkzeugwechselsystem bekannt, wobei der Werkzeugwechsel mit dem Hinteranschlag durchgeführt wird.

Das Werkzeugwechselsystem der AT 511 078 B1 weist den Nachteil auf, dass der Hinteranschlag aufgrund des Erfordernis seiner Genauigkeit nicht ideal für einen Werkezugwechsel geeignet ist.

Weitere Werkzeugwechselsysteme sind aus der EP 2 913 114 A1, der JP 2005 07446 A der AT 508 923 A4, der AT 515 526 B1 und der WO2013/166538 A1 bekannt.

Der vorliegenden Erfindung liegt die Aufgabe zugrunde, ein verbessertes Werkzeugwechselsystem zu schaffen, mit dem der Werkzeugwechsel möglichst schnell durchgeführt werden kann.

Diese Aufgabe der Erfindung wird durch die Merkmale gemäß Anspruch 1 gelöst. Erfindungsgemäß ist ein Greifersystem für eine Abkantpresse mit einer Greifvorrichtung zum Manipulieren eines Biegewerkzeuges ausgebildet. Die Greifvorrichtung umfasst einen ersten Greifarm und einen in Klemmrichtung relativ zum ersten Greifarm verschiebbaren zweiten Greifarm, welche Greifarme zum Eingreifen in eine Greifnut eines Biegewerkzeuges und zum Klemmen des Biegewerkzeuges ausgebildet sind. Die Greifvorrichtung ist an einem Schlittensystem angeordnet, welches Schlittensystem eine horizontale Linearführung umfasst, mittels welcher die Greifvorrichtung in Längsrichtung der Greifarme zur Greifnut hin oder von der Greifnut weg verschiebbar ist.

Von Vorteil an der erfindungsgemäßen Ausbildung des Greifersystems ist, dass durch das Schlittensystem die Greifvorrichtung gehalten und geführt werden kann, insbesondere wird das Einsetzen eines Biegewerkzeuges in die Werkzeugaufnahme vom Greifersystem unter möglichst geringem Zeiteinsatz bewältigt. Dadurch können die Nebenzeiten, insbesondere die Rüstzeit, der Biegemaschine möglichst kurz gehalten werden.

Weiters kann es zweckmäßig sein, dass an der vertikalen Linearführung zwei der horizontalen Linearführungen angeordnet sind, an welchen jeweils eine Greifvorrichtung ausgebildet ist. Von Vorteil ist hierbei, dass für Biegewerkzeuge welche im oberen Pressbalken eingesetzt sind und für Biegewerkzeuge welche im unteren Pressbalken eingesetzt sind, eine eigene Greifvorrichtung ausgebildet ist. Dadurch kann ein synchrones Rüsten des oberen Pressbalkens und des unteren Pressbalkens erreicht werden und somit die Nebenzeiten weiter verkürzt werden.

Ferner kann vorgesehen sein, dass die vertikale Linearführung an einer weiteren horizontalen Linearführung angeordnet ist, mittels welcher die Greifvorrichtung in horizontaler Verschieberichtung einer Werkzeugaufnahme der Abkantpresse verschiebbar ist. Von Vorteil ist hierbei, dass durch die weitere, horizontale Linearführung erreicht werden kann, dass die Biegewerkzeuge in verschiedenen Positionen in Längsrichtung der Werkzeugaufnahme positioniert werden können.

Erfindungsgemäß umfasst die horizontale Linearführung einen auf einer Führungsschiene geführten Führungsschlitten, auf welchem die Greifvorrichtung aufgenommen ist, wobei der Führungsschlitten mittels einem Aktor, vorzugsweise einem Pneumatikzylinder, zwischen einer ausgeschobenen Einsetzstellung und einer zurückgezogenen Ruhestellung positionierbar ist. Von Vorteil ist hierbei, dass durch eine derartige Anordnung die Greifvorrichtung am Führungsschlitten angeordnet sein kann und somit ein Ausschieben bzw. Einziehen der Greifvorrichtung erreicht werden kann.

Vorteilhaft ist auch eine Ausprägung, gemäß welcher vorgesehen sein kann, dass ein Zylinderrohr des Pneumatikzylinders mit der Führungsschiene gekoppelt ist und dass eine Kolbenstange des Pneumatikzylinders mit dem Führungsschlitten gekoppelt ist. Insbesondere ist der Pneumatikzylinder so orientiert, dass eine möglichst gute Funktionalität des Greifersystemes erreicht werden kann.

Erfindungsgemäß ist zwischen der Führungsschiene und dem Pneumatikzylinder ein weiterer Aktor angeordnet mittels welchem der Pneumatikzylinder verschiebbar ist und somit die ausgeschobene Einsetzstellung des Pneumatikzylinders variierbar ist. Von Vorteil ist hierbei, dass dadurch das Greifersystem an verschiedene Biegewerkzeuge angepasst werden kann. Insbesondere kann durch Anpassung der Einsatzstellung erreicht werden, dass der Pneumaitkzylinder, welcher zum Verschieben der Greifvorrichtung zwischen Einsatzstellung und Ruhestellung ausgebildet ist, nur in diese beiden Positionen bewegt werden muss. Dadurch kann der Pneumatikzylinder möglichst einfach aufgebaut sein bzw. eine hohe Verfahrgeschwindigkeit aufweisen.

Ferner kann es zweckmäßig sein, wenn das Zylinderrohr des Pneumatikzylinders an einem Positionierschlitten angeordnet ist, welcher mittels dem weiteren Aktor horizontal relativ zur vertikalen Linearführung verschiebbar ist. Von Vorteil ist hierbei, dass dem Greifersystem eine gewisse Stabilität verliehen wird, um ein exaktes Positionieren der Greifvorrichtung zu ermöglichen.

Darüber hinaus kann vorgesehen sein, dass der weitere Aktor als Stellmotor ausgebildet ist, welcher stufenlos zwischen einer Minimalstellung und einer Maximalstellung verschiebbar ist. Von Vorteil ist hierbei, dass dadurch das Greifersystem nicht nur an zwei verschiedene Biegewerkzeuge sondern an eine unbegrenzte Anzahl von verschiedenen Biegewerkzeugen angepasst werden kann.

Weiters kann vorgesehen sein, dass ein Sperrmechanismus ausgebildet ist, mittels welchem die Position des Zylinderrohres des Pneumatikzylinders, welche mittels dem weiteren Aktor einstellbar ist, fixierbar ist. Von Vorteil ist hierbei, dass dadurch die Position der ausgeschobenen Einsatzstellung bzw. der zurückgezogenen Ruhestellung fixiert werden kann, um eine hohe Wiederholgenauigkeit zu erreichen. Darüber hinaus kann vorgesehen sein, dass vom Pneumatikzylinder erhöhte Verfahrgeschwindigkeiten gefahren werden und durch den Sperrmechanismus die Kräfte, welche aufgrund der Massenträgheit der Greifvorrichtung bei hohen Verfahrgeschwindigkeiten auftreten, nicht vom weiteren Aktor aufgenommen werden müssen. Dadurch kann der weitere Aktor, welcher vorrangig zum Einstellen der Endstellungen ausgebildet ist und somit eine hohe Positioniergenauigkeit aufweisen muss, eine nur geringe Stellkraft aufweisen. Insbesondere kann dadurch erreicht werden, dass der weitere Aktor möglichst klein und auch möglichst kostengünstig ausgebildet sein kann.

Gemäß einer besonderen Ausprägung ist es möglich, dass der Sperrmechanismus einen Sperrzapfen umfasst, welcher mittels einem Sperrzylinder verschiebbar ist, wobei der Sperrzapfen an dessen Stirnfläche eine gezahnte Oberfläche aufweist und mit einer Zahnleiste zusammenwirkt, wobei im ausgefahrenen Zustand des Sperrzylinders die gezahnte Oberfläche in die Zahnleiste eingreift. Von Vorteil ist hierbei, dass ein derartiger Sperrzapfen platzsparend im Greifersystem angeordnet sein kann. Durch die gezahnte Oberfläche des Sperrzapfens bzw. im Eingriff des Sperrzapfens in eine damit korrespondierende Zahnleiste kann erreicht werden, dass zwischen Sperrzapfen und Zahnleiste eine formschlüssige Verbindung realisiert wird und somit durch den Sperrmechanismus eine große Haltekraft aufgebracht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht einer schematisch dargestellten Bearbeitungsanlage;
- Fig. 2: eine perspektivische Ansicht eines Biegewerkzeuges;
- Fig. 3: eine Draufsicht auf das Biegewerkzeug;
- Fig. 4: eine perspektivische Ansicht einer Greifvorrichtung zum Manipulieren des Biegewerkzeuges;
- Fig. 5: eine perspektivische Ansicht der Greifvorrichtung im Halbschnitt;
- Fig. 6: eine Darstellung der der Greifvorrichtung im Halbschnitt;
- Fig. 7: eine perspektivische Ansicht des Greifersystems von einem ersten Blickwinkel;
- Fig. 8: eine perspektivische Ansicht des Greifersystems von einem zweiten Blickwinkel;
- Fig. 9: eine perspektivische Ansicht des Greifersystems von einem dritten Blickwinkel;
- Fig. 10: eine Vorderansicht des Greifersystems;
- Fig. 11: eine Schnittdarstellung des Greifersystems entlang der Schnittlinie XI-XI aus Fig. 10;
- Fig. 12: eine perspektivische Ansicht des Greifersystems;
- Fig. 13: eine Ansicht der Greifvorrichtung mit Biegewerkzeug in einer Schnittdarstellung, wobei die Greifvorrichtung in Aufnahmeschritt eins an der zweiten Greifnut positioniert ist;
- Fig. 14: eine Ansicht der Greifvorrichtung mit Biegewerkzeug in einer Schnittdarstellung, wobei die Greifvorrichtung in Aufnahmeschritt zwei an der zweiten Greifnut positioniert ist;
- Fig. 15: eine Ansicht der Greifvorrichtung mit Biegewerkzeug in einer Schnittdarstellung, wobei die Greifvorrichtung in Aufnahmeschritt drei an der zweiten Greifnut positioniert ist;
- Fig. 16: eine Ansicht der Greifvorrichtung mit Biegewerkzeug in einer Schnittdarstellung, wobei die Greifvorrichtung in Aufnahmeschritt eins an der ersten Greifnut positioniert ist;
- Fig. 17: eine Ansicht der Greifvorrichtung mit Biegewerkzeug in einer Schnittdarstellung, wobei die Greifvorrichtung in Aufnahmeschritt zwei an der ersten Greifnut positioniert ist;
- Fig. 18: eine Ansicht der Greifvorrichtung mit Biegewerkzeug in einer Schnittdarstellung, wobei die Greifvorrichtung in Aufnahmeschritt drei an der ersten Greifnut positioniert ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

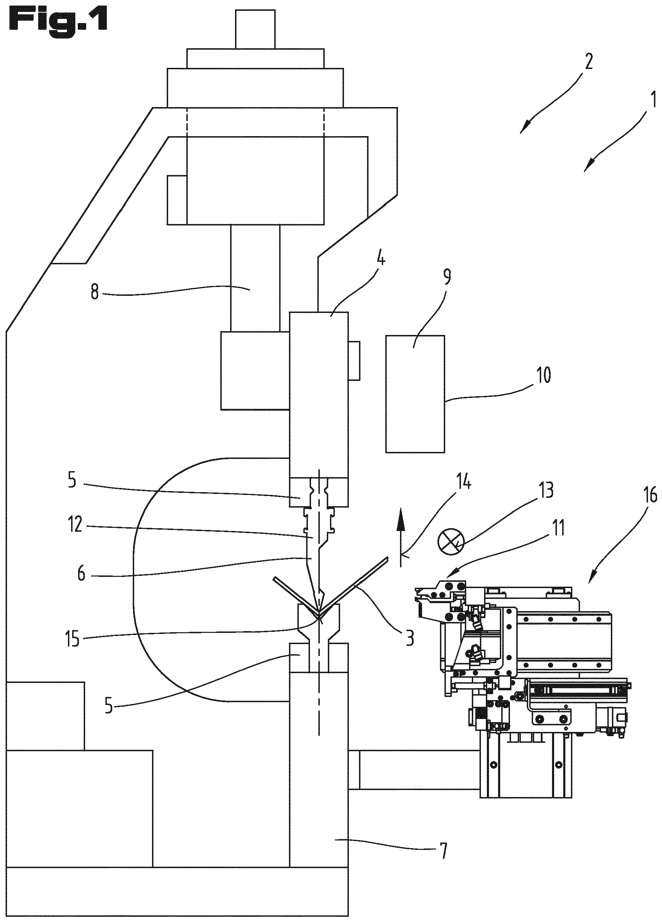

Fig. 1 zeigt in schematischer Darstellung die Seitenansicht einer Bearbeitungsanlage 1. Die Bearbeitungsanlage 1 umfasst eine Abkantpresse 2, welche zum Biegen eines Bleches 3 vorgesehen ist.

Die Abkantpresse 2 umfasst weiters einen ersten verstellbaren Pressbalken 4, in welchem eine Werkzeugaufnahme 5 zur Aufnahme eines ersten Biegewerkzeuges 6 ausgebildet ist. Weiters umfasst die Abkantpresse 2 einen zweiten feststehenden Pressbalken 7 an welchem ebenfalls eine Werkzeugaufnahme 5 zur Aufnahme eines Biegewerkzeuges 6 ausgebildet ist.

Das zu biegende Blech 3 wird für den Biegevorgang zwischen den Biegewerkzeugen 6 des ersten 4 und des zweiten Pressbalken 7 eingelegt. Das im ersten Pressbalken 4 befestigte Biegewerkzeug 6 respektive der erste verstellbare Pressbalken 4 wird durch eine Pressenantriebseinheit 8 in vertikaler Richtung nach oben bzw. nach unten bewegt. Zur Steuerung der Pressenantriebseinheit 8 ist eine Rechnereinheit 9 vorgesehen, welche an eine Eingabe- und/oder Anzeigeeinheit 10 gekoppelt sein kann.

Weiters kann, wie in Fig. 1 dargestellt, vorgesehen sein, dass die Bearbeitungsanlage 1 eine Greifvorrichtung 11 umfasst, welche zur Manipulation des Biegewerkzeuges 6 dient.

Aus Fig. 1 ist weiters ersichtlich, dass das Biegewerkzeug 6 einen Werkzeugkörper 12 aufweist, welcher beim Biegevorgang das zu biegende Blech 3 verformt. Das Biegewerkzeug 6 kann in der Werkzeugaufnahme 5 in horizontaler Verschieberichtung 13 entlang des Klemmabschnittes der Werkzeugaufnahme 5 positioniert werden. Dazu muss das Biegewerkzeug 6 in horizontaler Verschieberichtung 13 seitlich in die Werkzeugaufnahme 5 des Pressbalkens 4 eingeschoben werden.

Alternativ dazu ist es auch möglich, dass das Biegewerkzeug 6 in vertikaler Einsetzrichtung 14 in die Werkzeugaufnahme 5 eingebracht wird. Für diese Möglichkeit das Biegewerkzeug 6 in die Werkzeugaufnahme 5 einzubringen ist es notwendig, dass das Biegewerkzeug 6 einen Einsetzmechanismus aufweist.

In der Werkzeugaufnahme 5 können mehrere Biegewerkzeuge 6, welche gleichartig ausgebildet sind, nebeneinander positioniert werden und aneinander anschließen. Somit kann erreicht werden, dass Biegekanten 15 von einzelnen Biegewerkzeugen 6 eine entsprechend lange Bearbeitungskante bilden.

Eine weitere Möglichkeit zur Anordnung von Biegewerkzeugen 6 besteht darin, dass in der Werkzeugaufnahme 5 mehrere unterschiedliche Biegewerkzeuge 6 positioniert werden. Diese unterschiedlichen Biegewerkzeuge 6 werden dann für verschiedene Biegevorgänge verwendet und können auch individuell ausgetauscht werden. Werden Biegewerkzeuge 6 unterschiedlicher Art für unterschiedliche Arbeitsschritte verwendet, so ist es üblich, dass diese in einem gewissen Abstand zueinander angeordnet sind.

Um eine möglichst flexible Bearbeitungsanlage 1 zur Verfügung zu stellen, ist es notwendig, dass die Biegewerkzeuge 6 einfach und schnell in der Werkzeugaufnahme 5 gespannt und aus dieser wieder herausgenommen werden können.

Aus der Fig. 1 ist gut ersichtlich, dass die Greifvorrichtung 11 an einem Greifersystem 16 angeordnet ist. Das Greifersystem 16 kann beispielsweise mit dem zweiten Pressbalken 7 gekoppelt sein. Hierbei ist es denkbar, dass wie in Fig. 1 dargestellt das Greifersystem 16 an der Außenseite des Pressbalkens 7 angeordnet ist. Es kann jedoch aus Platzgründen bzw. zur Verbesserung der Bedienbarkeit der Biegemaschine vorgesehen sein, dass das Greifersystem 16 an der Innenseite des Pressbalkens 7 angeordnet ist.

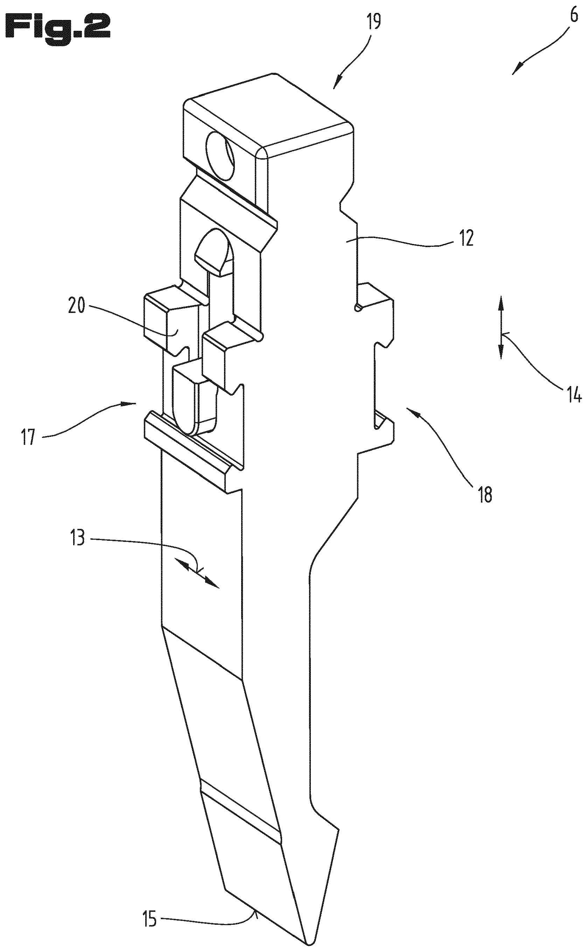

Fig. 2 zeigt das Biegewerkzeug 6 in einer perspektivischen Ansicht. Hierbei ist gut erkennbar, dass der Hauptbestandteil des Biegewerkzeuges 6 durch den Werkzeugkörper 12 gebildet wird.

Weiters kann vorgesehen sein, dass der Werkzeugkörper 12 eine erste Greifnut 17 und eine zweite Greifnut 18 aufweist, welche im Werkzeugkörper 12 ausgebildet sind. Die Greifnuten 17, 18 können einander gegenüberliegend am Werkzeugkörper 12 angeordnet sein, wobei sie sich in einer zur Biegekante 15 parallelen Längsrichtung erstrecken. Die Greifnuten 17, 18 weisen hierbei eine derartige Form auf, dass die Greifvorrichtung 11 beim Biegewerkzeugwechsel in diese eingreifen kann, und somit das Biegewerkzeug 6 an der Abkantpresse 2 rüsten und bedarfsweise wieder abrüsten kann.

Es ist jedoch nicht zwingend erforderlich, dass die Greifnuten 17, 18 in Form einer Nut ausgebildet sind, sondern ist auch denkbar, dass diese beispielsweise in Form von einfachen Bohrungen ausgebildet sind, in welche eine Greifvorrichtung 11 eingreifen kann.

Das Biegewerkzeug 6 kann wahlweise an der ersten Greifnut 17 oder an der zweiten Greifnut 18 von der Greifvorrichtung 11 aufgenommen werden.

Weiters weist das Biegewerkzeug 6 einen Aufnahmeabschnitt 19 auf, welcher in der Werkzeugaufnahme 5 eingesetzt wird. Dadurch ist das Biegewerkzeug 6 in der Abkantpresse 2 gehaltert.

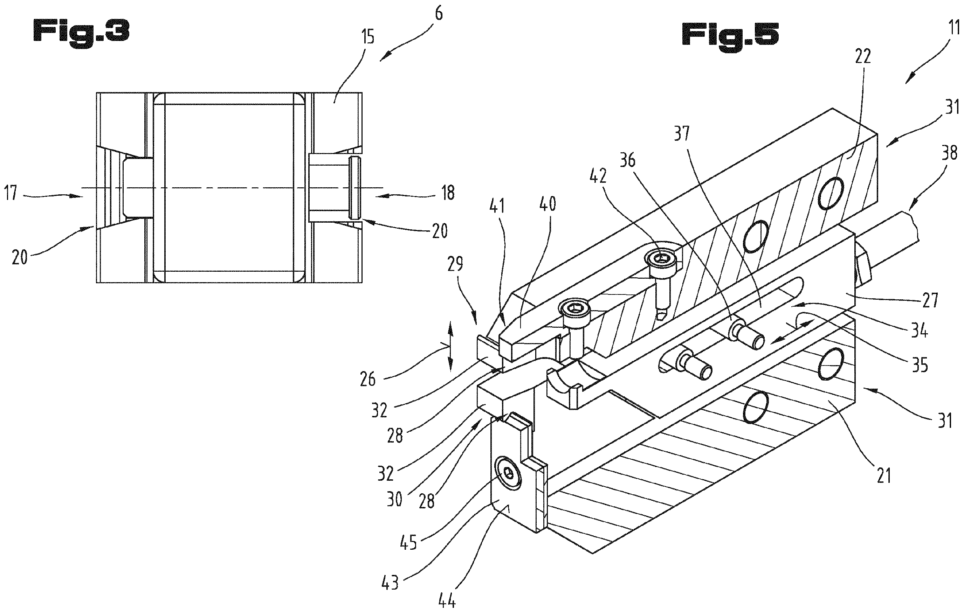

Fig. 3 zeigt eine Draufsicht auf das Biegewerkzeug, wobei in Zusammenschau mit Fig. 2 gut erkennbar ist, dass im Werkzeugkörper 12 sowohl im Bereich der ersten Greifnut 17 als auch im Bereich der zweiten Greifnut 18 eine Zentrierausnehmung 20 ausgebildet sein kann. Die Zentrierausnehmung 20 kann die Aufnahme des Biegewerkzeuges 6 durch die Greifvorrichtung 11 erleichtern. Insbesondere wird durch die Zentrierausnehmung 20 eine korrekte Positionierung des Biegewerkzeuges 6 relativ zur Greifvorrichtung 11 erleichtert.

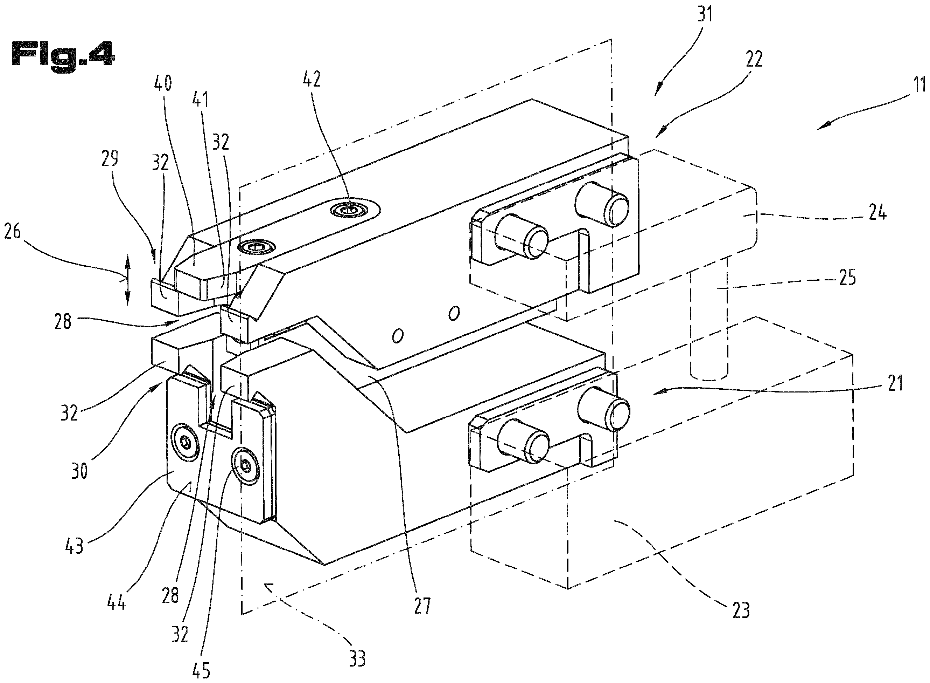

In den Figuren 4 bis 6 ist ein Ausführungsbeispiel einer Greifvorrichtung 11 in verschiedenen Ansichten gezeigt, wobei für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Fig. 4 zeigt eine perspektivische Ansicht der Greifvorrichtung 11, welche zum Manipulieren des Biegewerkzeuges 6, insbesondere zum Einsetzen des Biegewerkzeuges 6 in die Werkzeugaufnahme 5 bzw. zum Herausnehmen des Biegewerkzeuges 6 aus der Werkzeugaufnahme 5 ausgebildet ist.

Fig. 5 zeigt ebenfalls eine perspektivische Ansicht der Greifvorrichtung 11, wobei diese in einem Halbschnitt dargestellt ist, um die Sicht auf innenliegende Teile freizugeben.

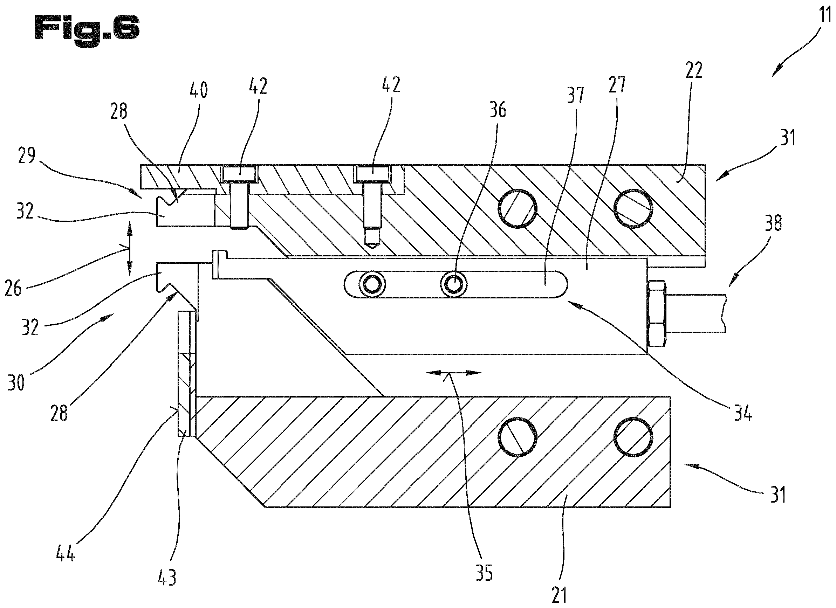

Fig. 6 zeigt einen Halbschnitt der Greifvorrichtung 11.

Der Aufbau der Greifvorrichtung 11 wird anhand einer Zusammenschau aus Fig. 4, Fig. 5 und Fig. 6 erklärt bzw. erläutert.

Wie aus Fig. 4 ersichtlich, weist die Greifvorrichtung 11 einen ersten Greifarm 21 und einen zweiten Greifarm 22 auf. Der erste Greifarm 21 ist hierbei an einer ersten Greifarmaufnahme 23 angeordnet und der zweite Greifarm 22 ist an einer zweiten Greifarmaufnahme 24 angeordnet. Hierbei kann vorgesehen sein, dass die zweite Greifarmaufnahme 24 einen ersten Aktuator 25 aufweist, wodurch der zweite Greifarm 22 in einer Klemmrichtung 26 relativ zum ersten Greifarm 21 verschiebbar ist. Mit anderen Worten ausgedrückt können durch den ersten Aktuator 25 die beiden Greifarme 21, 22 aufeinander zubewegt oder voneinander entfernt werden.

In einer Alternativvariante kann auch vorgesehen sein, dass der Aktuator 25 auf beide Greifarme 21, 22 wirkt und dass diese durch den Aktuator 25 symmetrisch aufeinander zu oder voneinander weg bewegt werden.

Weiters kann vorgesehen sein, dass die Greifvorrichtung 11 ein Entriegelungsorgan 27 aufweist, welches zwischen den beiden Greifarmen 21, 22 aufgenommen ist. Hierbei kann vorgesehen sein, dass sowohl am ersten Greifarm 21 als auch am zweiten Greifarm 22 eine Ausnehmung 28 ausgebildet ist, wobei im durch die Ausnehmung 28 entstehenden Freiraum das Entriegelungsorgan 27 bewegbar ist. Die Ausnehmung 28 kann sich von einem Greifabschnitt 29 bzw. einem vorderen Endabschnitt 30 bis zu einem hinteren Greifarmbereich 31 erstrecken.

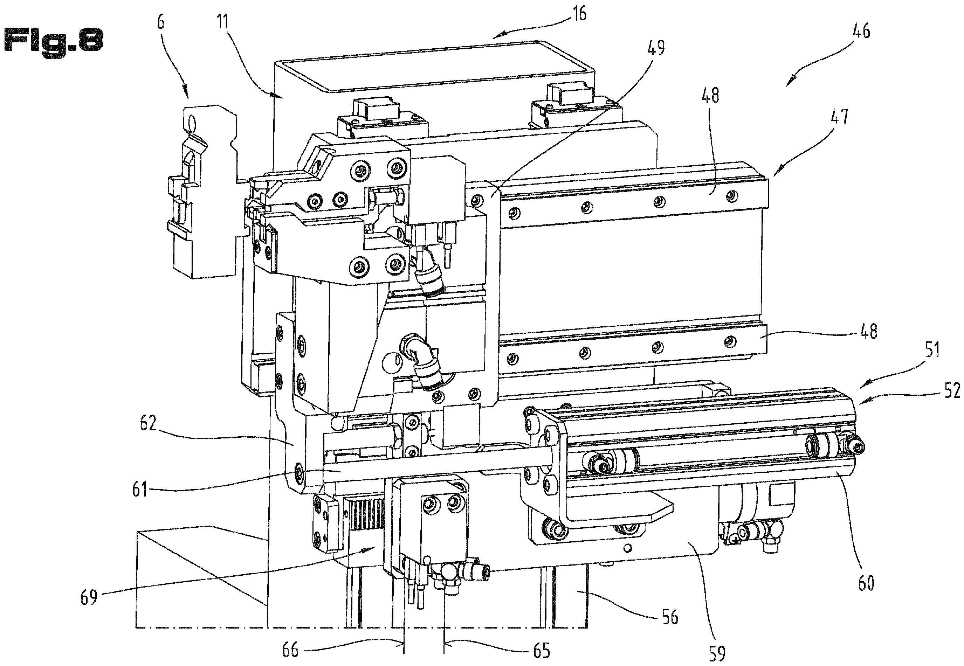

Insbesondere kann vorgesehen sein, dass durch die Ausnehmung 28 in den Greifarmen 21, 22 am Greifabschnitt 29 jeweils zwei Greiffinger 32 ausgebildet sind. Die Greiffinger 32 weisen, wie besonders gut in Fig. 8 ersichtlich, eine schwalbenschwanzähnliche Form auf, sodass sie in die erste Greifnut 17 oder in die zweite Greifnut 18 des Biegewerkzeuges 6 eingreifen können. Dadurch, dass der zweite Greifarm 22 relativ zum ersten Greifarm 21 in Klemmrichtung 26 verschiebbar ist, kann hierbei das Biegewerkzeug 6 wahlweise gegriffen oder wieder losgelassen werden. Weiters kann vorgesehen sein, dass der erste Greifarm 21 bzw. der zweite Greifarm 22 im Wesentlichen symmetrisch bezüglich einer Mittelebene 33 ausgebildet sind, wobei die beiden Greiffinger 32 eines Greifarmes 21, 22 jeweils in gleichem Abstand zur Mittelebene 33 angeordnet sind und die Ausnehmung 28 genau mittig an der Mittelebene 33 angeordnet ist.

Ferner kann vorgesehen sein, dass das Entriegelungsorgan 27 mittels einer verdrehstarren Längsführung 34 am zweiten Greifarm 22 angeordnet ist, sodass es in Längsrichtung 35 relativ zum ersten Greifarm 21 bzw. zum zweiten Greifarm 22 verschoben werden kann. Die verdrehstarre Längsführung 34 kann mittels zweier Führungsbolzen 36 realisiert werden, welche den zweiten Greifarm 22 quer durchragen und mit einem Langloch 37 im Entriegelungsorgan 27 zusammenwirken. Außerdem kann vorgesehen sein, dass die Greifvorrichtung 11 einen zweiten Aktuator 38 umfasst, mittels welchem das Entriegelungsorgan 27 in Bewegungsrichtung 35 relativ zum zweiten Greifarm 22 bewegt werden kann.

Sowohl der erste Aktuator 25 als auch der zweite Aktuator 38 können beispielsweise in Form eines Pneumatik- oder Hydraulikzylinder realisiert werden. Alternativ dazu ist es beispielsweise auch denkbar, dass ein elektrischer Stellzylinder oder ein Linearmotor als Aktuator verwendet wird.

Das Entriegelungsorgan 27 ist dazu ausgebildet, um ein Betätigungselement des Biegewerkzeuges 6 betätigen zu können und somit erreichen zu können, dass das Biegewerkzeug 6 in vertikaler Einsetzrichtung 14 die Werkzeugaufnahme 5 eingesetzt und aus dieser wieder herausgenommen werden kann.

Weiters kann, wie besonders gut in Fig. 6 ersichtlich, vorgesehen sein, dass am zweiten Greifarm 22, insbesondere im Greifabschnitt 29, ein Zentriervorsprung 40 angeordnet ist, welcher in die Zentrierausnehmung 20 des Biegewerkzeuges 6 eingreifen kann. Hierdurch kann das Biegewerkzeug 6 relativ zur Greifvorrichtung 11 positioniert werden. Vorzugsweise ist der Zentriervorsprung 40 so ausgebildet, dass er beidseitig eine Abschrägung 41 aufweist, welche mit der Ausweitung in der Zentrierausnehmung 20 korrespondiert. Weiters kann vorgesehen sein, dass der Zentriervorsprung 40 in Form eines Flacheisens mit entsprechenden Abschrägungen ausgebildet ist und mittels einem Befestigungsmittel 42 am zweiten Greifarm befestigt ist.

Weiters ist es möglich, dass die Greifvorrichtung 11 ein Verschleißschutzelement 43 umfasst, welches im vorderen Endbereich 30 des ersten Greifarmes 21 angeordnet ist. Das Verschleißschutzelement 43 weist eine Oberfläche 44 auf. Weiters kann vorgesehen sein, dass das Verschleißschutzelement 43 mittels Befestigungsmittel 45 am ersten Greifarm 21 befestigt ist. Das Verschleißschutzelement 43 kann aus einem Kunststoff, insbesondere Gummimaterial, gebildet sein und somit als Dämpfer wirken.

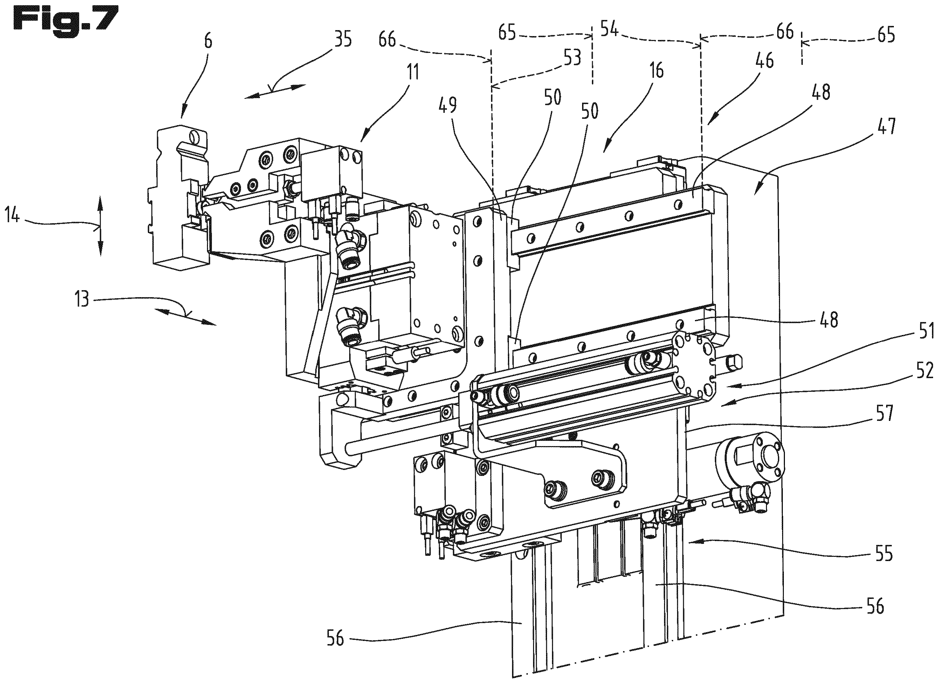

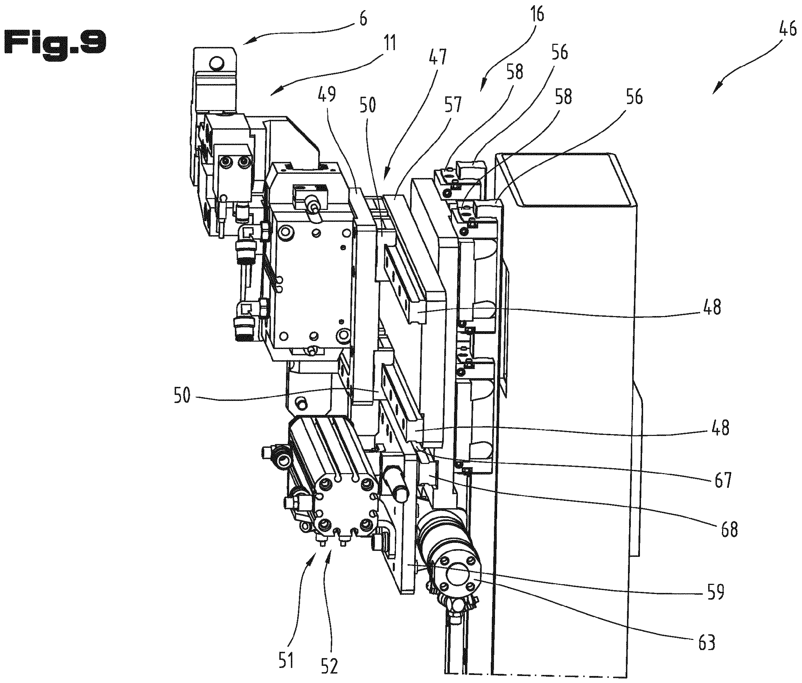

In den Fig. 7 bis 9 ist ein Schlittensystem 46 des Greifersystems 16 jeweils in einer perspektivischen Ansicht aus unterschiedlichen Blickwinkeln gezeigt, wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Das Schlittensystem 46 dient zur Manipulation der Greifvorrichtung 11. Die folgende Beschreibung des Aufbaus des Schlittensystems 46 bzw. der Greifvorrichtung 11 wird anhand einer Zusammenschau der Fig. 7 bis 9 beschrieben.

Das Schlittensystem 46 umfasst eine horizontale Linearführung 47 an welcher das Greifersystem 16 angeordnet ist. Die horizontale Linearführung 47 kann eine oder vorzugsweise zwei Führungsschienen 48 aufweisen, an welcher ein Führungsschlitten 49 horizontal verschiebbar gelagert ist. Im hier dargestellten Ausführungsbeispiel umfasst die horizontale Linearführung 47 zwei Führungsschienen 48, wobei im Führungsschlitten 49 zwei damit korrespondierende Schienenaufnahmen 50 ausgebildet sind. Durch die Ausbildung von zwei zueinander beabstandeten Führungsschienen 48 bzw. Schienenaufnahmen 50 kann erreicht werden, dass vom Führungsschlitten 49 ein erhöhtes Biegemoment übertragen werden kann und somit die Stabilität des Schlittensystems 46 erhöht werden kann. Die Schienenaufnahme 50 ist formschlüssig in der Führungsschiene 48 geführt. Hierbei ist es möglich, dass die Schienenaufnahme 50 kugelgelagert in der Führungsschien 48 geführt ist. In einer weiteren alternativen Ausführungsvariante ist denkbar, dass zwischen Schienenaufnahme 50 und Führungsschiene 48 eine Gleitführung ausgebildet ist.

Durch die horizontale Linearführung 47 kann die Greifvorrichtung 11 in Längsrichtung 35 der Greifarme 21, 22 verschoben werden. Somit kann die Greifvorrichtung 11 zum in der Werkzeugaufnahme 5 eingesetzten Biegewerkzeug 6 hin oder von diesem wegbewegt werden. Insbesondere kann hierbei vorgesehen sein, dass die Greifvorrichtung 11 direkt am Führungsschlitten 49 angeordnet ist und mittels Befestigungsmittel, wie etwa Schrauben, mit diesem verbunden ist.

Weiters kann ein Aktor 51 vorgesehen sein, welcher den Führungsschlitten 49 in Längsrichtung 35 der Greifarme 21, 22 bewegt. Der Aktor 51 kann beispielsweise als elektromotorischer Antrieb, als elektromotorischer Spindeltrieb, als Hydraulikzylinder und dergleichen ausgebildet sein. Im aktuell gezeigten Ausführungsbeispiel ist der Aktor 51 in Form eines Pneumatikzylinders 52 ausgebildet. Mittels dem Pneumatikzylinder 52 kann die Greifvorrichtung 11 in eine ausgeschobene Einsetzstellung 53 und in eine zurückgezogene Ruhestellung 54 bewegt werden. Der Pneumatikzylinder 52 ist insbesondere dazu ausgebildet um die Greifvorrichtung 11 möglichst schnell zwischen diesen beiden Stellungen bewegen zu können.

Die ausgeschobene Einsetzstellung 53 ist jene Stellung, in welcher das Biegewerkzeug in vertikaler Einsetzrichtung 14 in die Werkzeugaufnahme 5 eingesetzt werden kann.

Wenn sich die Greifvorrichtung 11 in der zurückgezogenen Ruhestellung 54 befindet, kann das Biegewerkzeug 6 in horizontaler Verschieberichtung 13 an den anderen in der Werkzeugaufnahme 5 aufgenommenen Biegewerkzeugen 6 vorbeibewegt werden.

Das Schlittensystem 46 kann darüber hinaus eine vertikale Linearführung 55 umfassen, mittels welcher die Greifvorrichtung 11 respektive die horizontale Linearführung 47 in vertikaler Einsetzrichtung 14 verstellbar ist. Analog zur bereits beschriebenen horizontalen Linearführung 47 kann vorgesehen sein, dass die vertikale Linearführung 55 eine oder mehrere Führungsschienen 56 aufweist, an welcher ein Führungsschlitten 57 geführt ist. Analog zur bereits beschriebenen Ausführungsvariante kann der Führungsschlitten 57 eine oder mehrere Schienenaufnahmen 58 aufweisen, welche mit den Führungsschienen 56 zusammenwirken.

Insbesondere kann vorgesehen sein, dass die Führungsschienen 48 der horizontalen Linearführung 47 am Führungsschlitten 57 der vertikalen Linearführung 55 angeordnet sind und dadurch vertikal verschiebbar sind.

In der hier dargestellten Ausführungsvariante kann weiters vorgesehen sein, dass eine Aktoraufnahme 59 ausgebildet ist, welche zur Aufnahme des Aktors 51, insbesondere des Pneumatikzylinders 52, dient. Insbesondere kann vorgesehen sein, dass ein Zylinderrohr 60 des Pneumatikzylinders 52 an der Aktoraufnahme 59 befestigt ist. Die Kolbenstange 61 des Pneumatikzylinders 52 kann mittels einer Befestigungsaufnahme 62 mit dem Führungsschlitten 49 der horizontalen Linearführung 47 gekoppelt sein.

Ferner kann vorgesehen sein, dass ein weiterer Aktor 63 ausgebildet ist, welcher mit dem Führungsschlitten 57 der vertikalen Linearführung 55 und mit der Aktoraufnahme 59 gekoppelt ist. Dadurch kann erreicht werden, dass die Aktoraufnahme 59 in Längsrichtung 35 der Greiffinger 21, 22 verschoben werden kann. Somit kann der komplette Aktor 51 in Längsrichtung 35 verschoben werden, wodurch die Einsatzstellung 53 zwischen einer Minimalstellung 65 und einer Maximalstellung 66 variiert werden kann.

Weiters kann vorgesehen sein, dass die Aktoraufnahme 59 in Form eines Positionierschlittens ausgebildet ist, wobei am Positionierschlitten 64 analog zu den bereits beschriebenen Schlittensystemen eine Schlittenaufnahme 67 ausgebildet sein kann, welche in einer Führungsschiene 68 geführt ist. Der weitere Aktor 63 ist vorzugsweise als Stellzylinder, beispielsweise in Form eines elektrischen Spindeltriebes, ausgebildet. Vorzugsweise ist der weitere Aktor 63 derart ausgebildet, dass der Positionierschlitten 64 respektive die Aktoraufnahme 59 stufenlos zwischen der Minimalstellung 65 und der Maxiamalstellung 66 verstellt werden kann. Weiters kann ein Sperrmechanismus 69 vorgesehen sein, mittels welchem die Position des Positionierschlittens 64 respektive der Aktoraufnahme 59 fixiert werden kann. Durch den Sperrmechanismus 69 kann somit erreicht werden, dass eine eventuell auftretende in Längsrichtung 35 orientierte Kraft nicht vom weiteren Aktor 63 aufgenommen werden muss. Eine derartige Kraft kann beispielsweise durch die Massenträgheit der Greifvorrichtung 11 und des Führungsschlittens 49 der horizontalen Linearführung 47, insbesondere bei hohen Fahrgeschwindigkeiten, auftreten.

Das Verstellsystem mittels dem weiteren Aktor 63 bringt insbesondere den Vorteil mit sich, dass die Einsetzstellung 53 der Greifvorrichtung 11 an die Geometrie des jeweils einzusetzenden Biegewerkzeuges 4 bzw. an die Geometrie der Werkzeugaufnahme 5 angepasst werden kann.

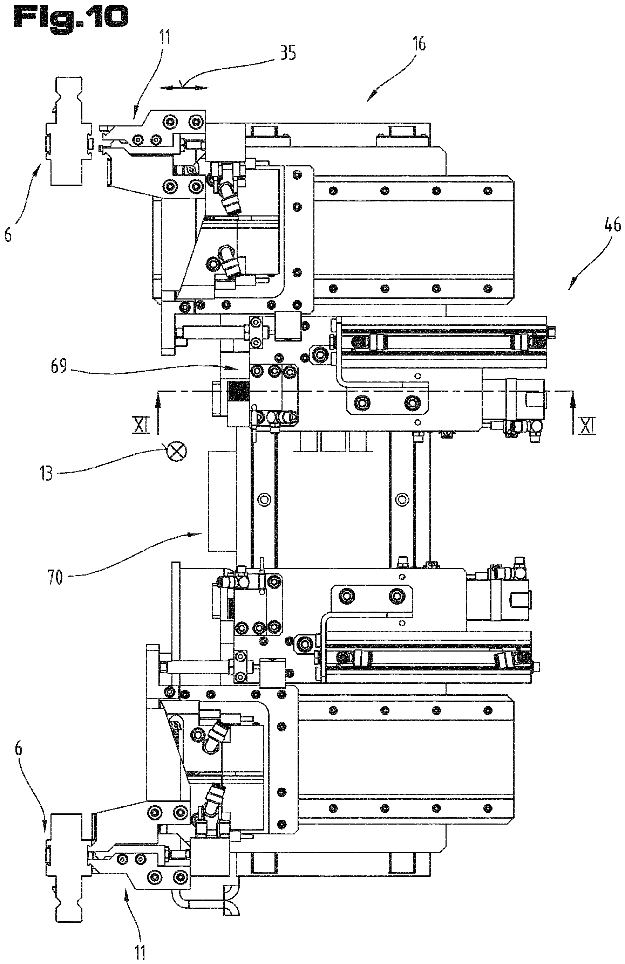

Fig. 10 zeigt das Greifersystem 16 in einer Ansicht von vorne. Wie aus Fig. 10 ersichtlich, kann vorgesehen sein, dass das Greifersystem 16, insbesondere das Schlittensystem 46 des Greifersystems 16, eine weitere horizontale Linearführung 70 aufweist, mittels welcher die vertikale Linearführung 55 in horizontaler Verschieberichtung 13 verschoben werden kann. Insbesondere kann vorgesehen sein, dass die horizontale Linearführung 47 die vertikale Linearführung 55 und die weitere horizontale Linearführung 70 jeweils im rechten Winkel zueinander angeordnet sind und somit die drei Hauptachsen eines kartesischen Koordinatensystems repräsentieren. Weiters ist aus Fig. 10 ersichtlich, dass vorgesehen sein kann, dass am Greifersystem 16 zwei der Greifvorrichtungen 11 angeordnet sind, wobei eine erste der Greifvorrichtungen 11 zum Manipulieren des oberen Biegewerkzeuges und eine zweite der Greifvorrichtungen 11 zum Manipulieren des unteren Biegewerkzeuges eingesetzt wird.

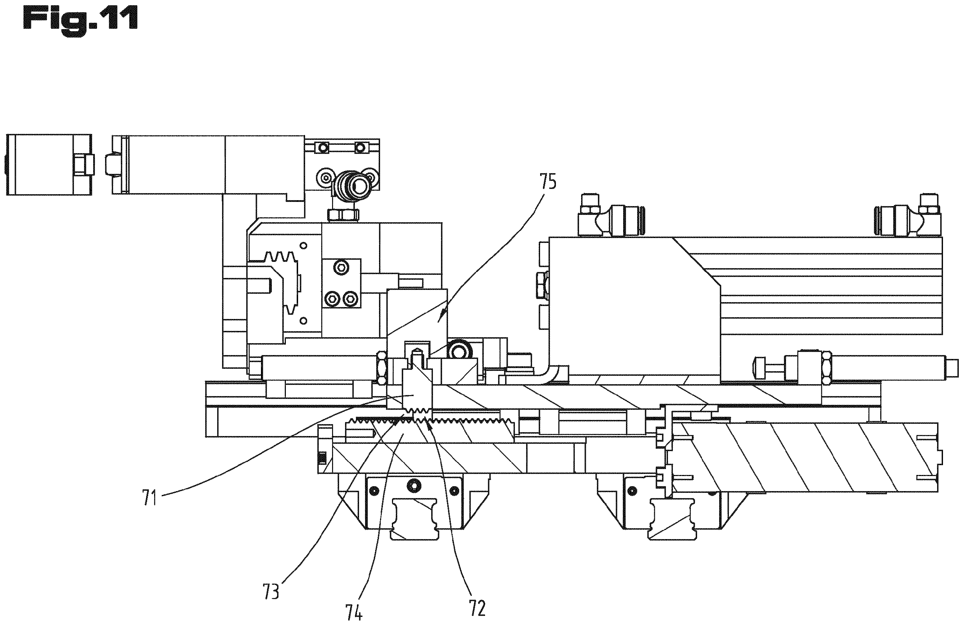

Fig. 11 zeigt eine Schnittdarstellung des Greifersystems 16 entsprechend der Schnittlinie XI - XI aus Fig. 10. Wie aus einer Zusammenschau der Fig. 10 und 11 ersichtlich, kann vorgesehen sein, dass der Sperrmechanismus 69 einen Sperrzapfen 71 umfasst, welcher an einer Stirnfläche 72 eine gezahnte Oberfläche 73 aufweist, die mit einer Zahnleiste 74 zusammenwirken kann. Dadurch kann im ausgefahrenen Zustand des Sperrzapfens 71 eine formschlüssige Verbindung zwischen Sperrzapfen 71 und Zahnleiste 74 geschaffen werden, wodurch der Positionierschlitten 64 gesperrt bzw. gesichert werden kann.

Die gezahnte Oberfläche 73 kann eine beliebige Verzahnung aufweisen. Insbesondere erscheint es vorteilhaft, wenn die gezahnte Oberfläche 73 eine Mikroverzahnung aufweist, wodurch theoretisch jede beliebige Position des Positionierschlittens 64 gesichert werden kann.

Im dargestellten Ausführungsbeispiel wird der Sperrzapfen 71 mittels einem Sperrzylinder 75 zwischen Freigabestellung und Sperrstellung verschoben.

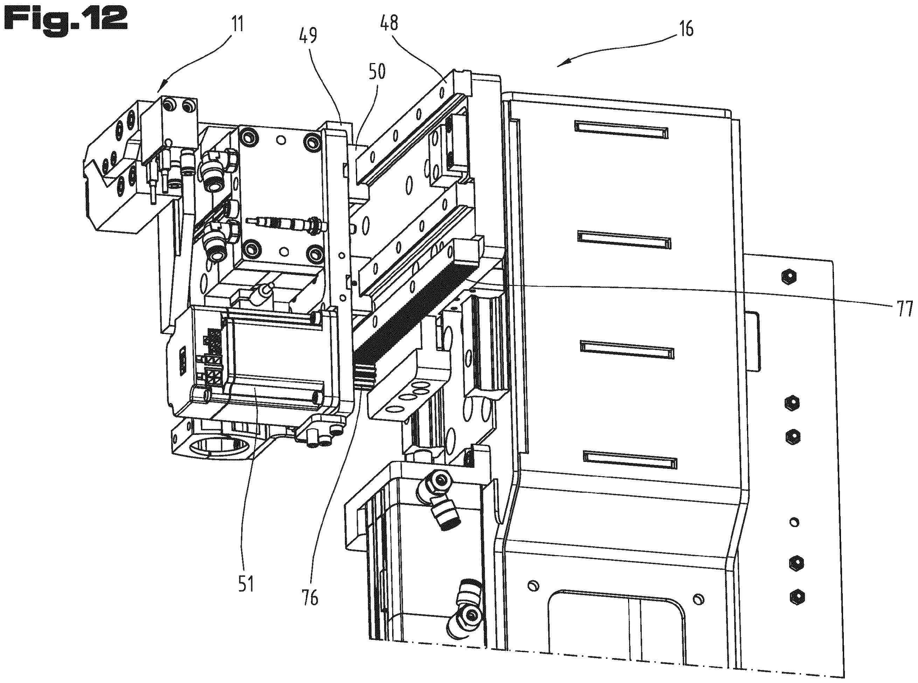

Fig. 12 zeigt ein weiteres Ausführungsbeispiel des Greifersystemes 16. Im Ausführungsbeispiel nach Fig. 12 ist der Aktor 51, welcher zum Verschieben des Führungsschlittens 49 mit der daran angeordneten Greifvorrichtung 11 dient, in Form eines Elektromotors ausgebildet. Ein derartiger Elektromotor kann beispielsweise ein Schrittmotor oder etwa ein Servomotor sein. Dabei ist ein Zahnrad 76 ausgebildet, welches vom Elektromotor respektive Aktor 51 angetrieben wird.

Das Zahnrad 76 greift in eine Zahnleiste 77 ein, wodurch eine Verstellung des Führungsschlittens 49 erreicht werden kann. Insbesondere kann vorgesehen sein, dass der Aktor 51 direkt am Führungsschlitten 49 angeordnet ist.

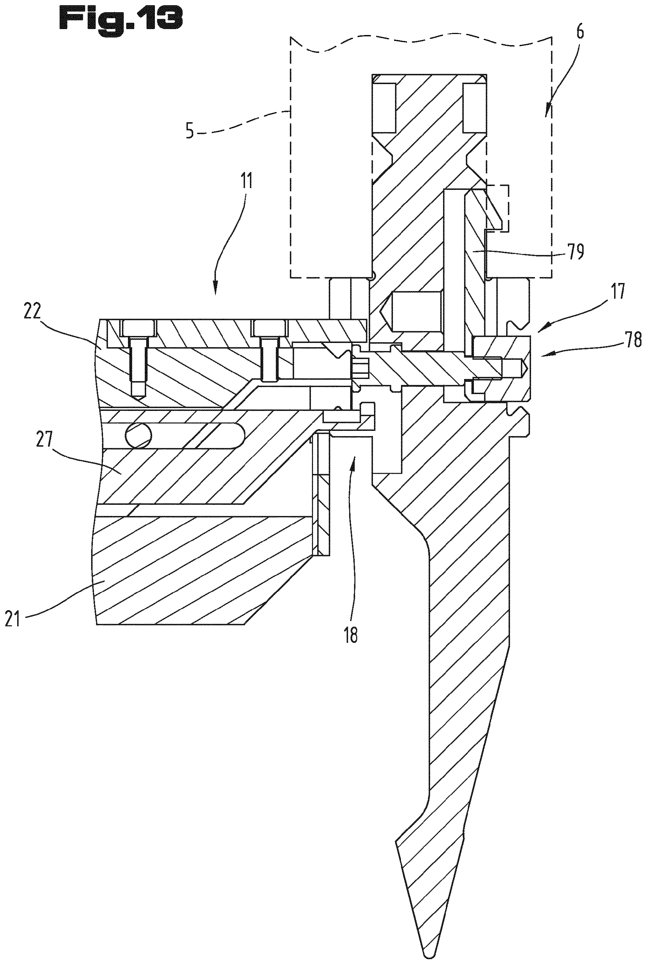

In den Figuren 13 bis 18 ist ein Zusammenwirken des erfindungsgemäßen Biegewerkzeuges 6 und der Greifvorrichtung 11 in verschiedenen Ansichten gezeigt, wobei für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Der Zentriervorsprung 40 ist derart ausgebildet, dass er mit der Zentrierausnehmung 20 zusammenwirkt und dadurch das Biegewerkzeug 6 in horizontaler Verschieberichtung 13 zur Greifvorrichtung 11 positioniert werden kann.

In den Fig. 13 bis 15 ist in einer Seitenansicht der Verfahrensablauf zum Aufnehmen des Biegewerkzeuges 6 durch die Greifvorrichtung 11 schrittweise dargestellt bzw. wird in weiterer Folge schrittweise erläutert.

In einem ersten Verfahrensschritt wird die Greifvorrichtung 11 so zum Biegewerkzeug 6 bewegt, dass die Greiffinger 32 des ersten bzw. des zweiten Greifarmes 21, 22 innerhalb der zweiten Greifnut 18 positioniert sind. Die Greifvorrichtung 11 wird hierbei mittels dem Schlittensystem 46 in einem anschließenden Verfahrensschritt nach unten verschoben, sodass die Greiffinger 32 des ersten Greifarmes 21 mit der zweiten Greifnut 18 in Eingriff stehen und einander berühren.

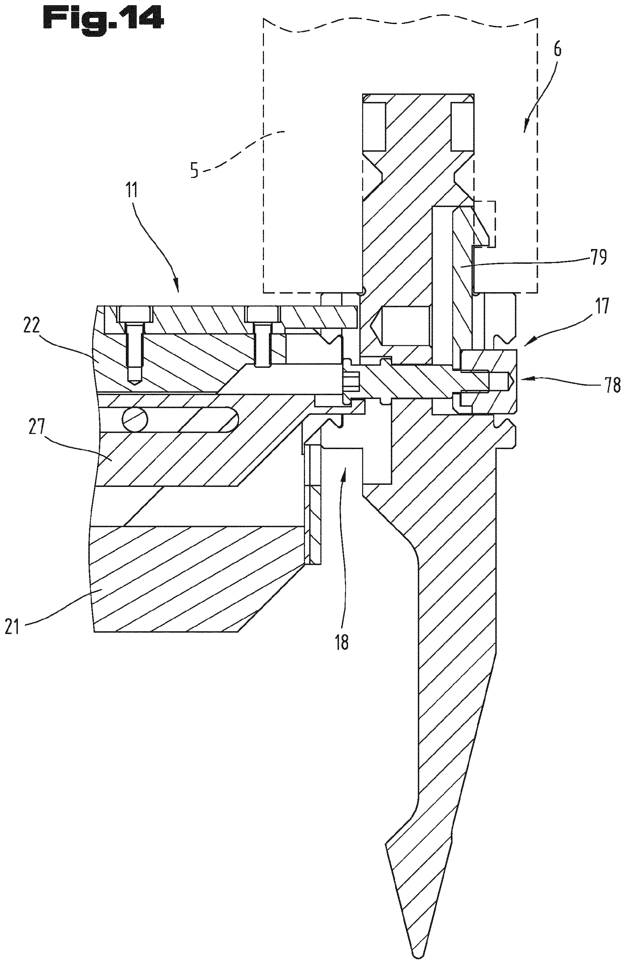

Anschließend wird in einem weiteren Verfahrensschritt, wie er in Fig. 14 dargestellt ist, der zweite Greifarm 22 mittels dem ersten Aktuator 25 in Klemmrichtung 26 nach oben bewegt und dadurch relativ zum ersten Greifarm 21 verschoben, sodass sowohl die Greiffinger 32 des ersten Greifarmes 21 als auch die Greiffinger 32 des zweiten Greifarmes 22 mit der zweiten Greifnut 18 in Eingriff stehen. Hierbei wird gleichzeitig das am zweiten Greifarm 22 befestigte Entriegelungsorgan 27 mit nach oben verschoben.

In einer Alternativvariante kann auch vorgesehen sein, dass die beiden Greifarme 21, 22 mittig der Greifnut 18 positioniert werden und mittels dem ersten Aktuator 25 symmetrisch auseinander bewegt werden.

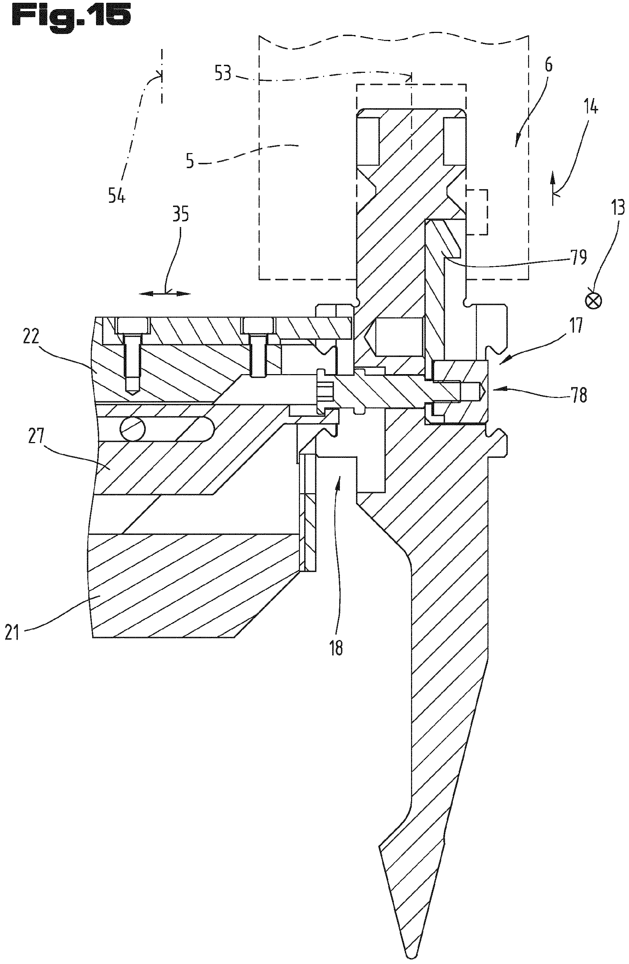

In einem weiteren Verfahrensschritt nach Fig. 15 kann nun das Entriegelungsorgan 27 durch den zweiten Aktuator 38 in eine vom Biegewerkzeug 6 abgewandte Richtung weggezogen werden, wodurch ein im Biegewerkzeug 6 angeordnetes Betätigungselement 78 und damit gekoppelt ein Riegelelement 79, welches zum Sichern des Biegewerkzeuges 6 relativ zur Werkzeugaufnahme 5 dient, aus seiner Verriegelungsstellung in seine Entriegelungsstellung verschoben wird.

Nun kann das Biegewerkzeug 6 entgegen der vertikalen Einsetzrichtung 14 frei aus der Werkzeugaufnahme 5 herausbewegt bzw. in dieser eingesetzt werden.

Anschließend kann das Biegewerkzeug 6 mittels der horizontalen Linearführung 47 in Längsrichtung 35 der Greifarme 21, 22 aus der Einsetzstellung 53 in die Ruhestellung 54 verschoben werden, sodass es anschließend mittels der weiteren horizontalen Linearführung 70 in horizontaler Verschieberichtung 13 an den weiteren Biegewerkzeugen 6 vorbei zum Werkzeugspeicher befördert werden kann.

Zum Ablegen des Biegewerkzeuges 6 kann nun in umgekehrter Reihenfolge das Betätigungselement 78 wieder zurück in seine Grundstellung gebracht werden und die Greifvorrichtung 11 aus dem Eingriff mit dem Biegewerkzeug 6 gebracht werden.

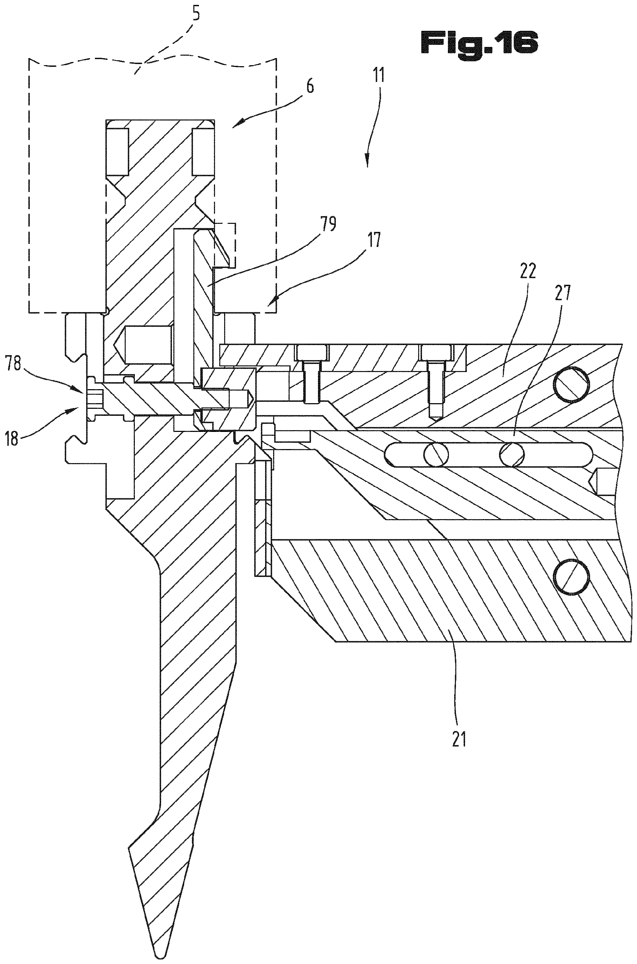

In den Fig. 16 bis 18 ist ein weiterer Verfahrensablauf zum Klemmen bzw. Entriegeln eines Biegewerkzeuges 6 gezeigt, wobei hier die Greifvorrichtung 11 in die erste Greifnut 17 des Biegewerkzeuges 6 eingreift. Mit anderen Worten ausgedrückt wird hier beschrieben, wie das Biegewerkzeug 6 von der gegenüberliegenden Seite gegriffen werden kann.

In einem ersten Verfahrensschritt wird die Greifvorrichtung 11 so zum Biegewerkzeug 6 bewegt, dass die Greiffinger 32 des ersten bzw. des zweiten Greifarmes 21, 22 innerhalb der ersten Greifnut 17 positioniert sind. Die Greifvorrichtung 11 wird hierbei mittels dem Schlittensystem 46 in einem anschließenden Verfahrensschritt nach unten verschoben, sodass die Greiffinger 32 des ersten Greifarmes 21 mit der ersten Greifnut 17 in Eingriff stehen und einander berühren.

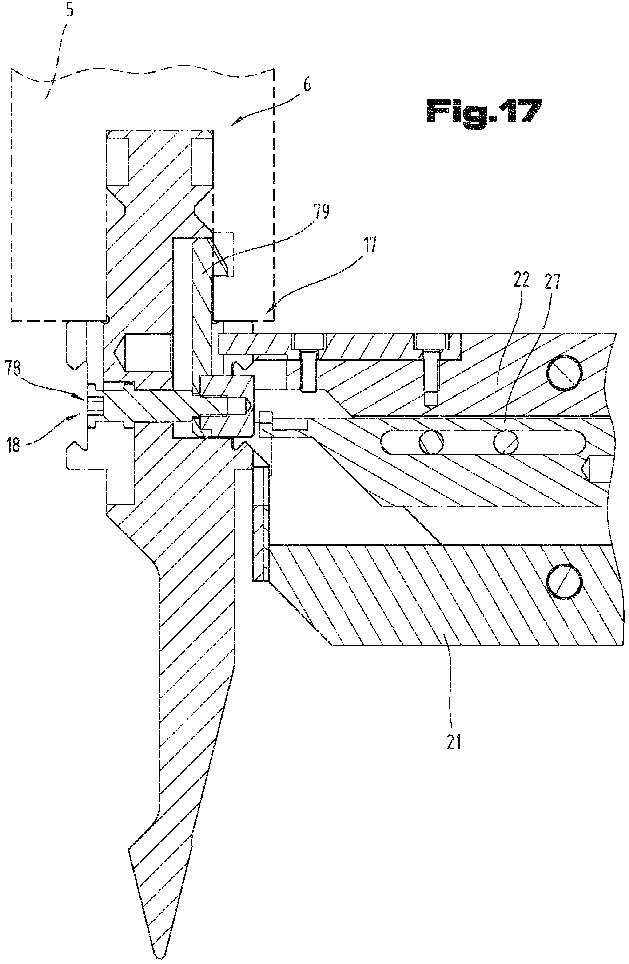

Anschließend wird in einem weiteren Verfahrensschritt, wie er in Fig. 17 dargestellt ist, der zweite Greifarm 22 mittels dem ersten Aktuator 25 in Klemmrichtung 26 nach oben bewegt und dadurch relativ zum ersten Greifarm 21 verschoben, sodass sowohl die Greiffinger 32 des ersten Greifarmes 21 als auch die Greiffinger 32 des zweiten Greifarmes 22 mit der ersten Greifnut 17 in Eingriff stehen. Hierbei wird gleichzeitig das am zweiten Greifarm 22 befestigte Entriegelungsorgan 27 mit nach oben verschoben.

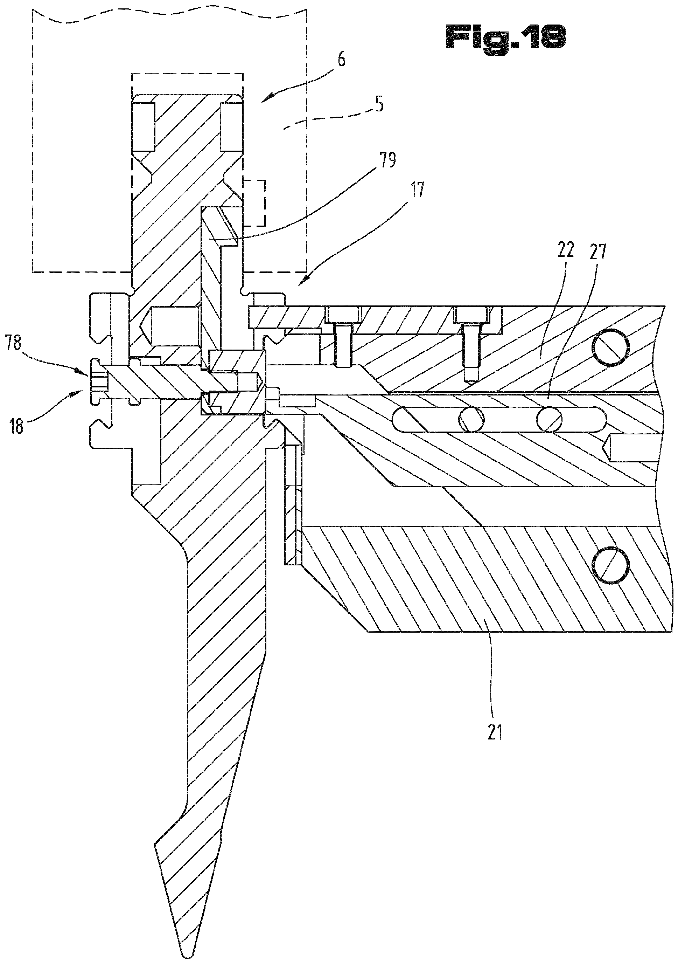

In einem weiteren Verfahrensschritt nach Fig. 18 kann nun das Entriegelungsorgan 27 durch den zweiten Aktuator 38 in eine zum Biegewerkzeug 6 zugewandte Richtung gedrückt werden, wodurch das Betätigungselement 78 und damit gekoppelt das Riegelelement 79 aus seiner Verriegelungsstellung in seine Entriegelungsstellung verschoben wird.

Nun kann das Biegewerkzeug 6 frei aus der Werkzeugaufnahme 5 herausbewegt bzw. in dieser eingesetzt werden.

Analog zum bereits beschriebenen Verfahrensablauf kann das Biegewerkzeug 6 in den Werkezugspeicher verbracht werden.

Zum Ablegen des Biegewerkzeuges 6 kann nun in umgekehrter Reihenfolge das Betätigungselement 78 wieder zurück in seine Grundstellung gebracht werden und die Greifvorrichtung 11 aus dem Eingriff mit dem Biegewerkzeug 6 gebracht werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Greifersystems 16 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Bearbeitungsanlage | 31 | hinterer Greifarmbereich |
| 2 | Abkantpresse | 32 | Greiffinger |
| 3 | Blech | 33 | Mittelebene |
| 4 | erster Pressbalken | 34 | verdrehstarre Längsführung |
| 5 | Werkzeugaufnahme | 35 | Längsrichtung |
| 6 | Biegewerkzeug | 36 | Führungsbolzen |
| 7 | zweiter Pressbalken | 37 | Langloch |
| 8 | Pressenantriebseinheit | 38 | zweiter Aktuator |
| 9 | Rechnereinheit | 39 | vorderer Endbereich Entriegelungsorgan |
| 10 | Eingabe- Anzeigeeinheit | 40 | Zentriervorsprung |
| 11 | Greifvorrichtung | 41 | Abschrägung |
| 12 | Werkzeugkörper | 42 | Befestigungsmittel |
| 13 | horizontale Verschieberichtung | 43 | Verschleißschutzelement |
| 14 | vertikale Einsetzrichtung | 44 | Oberfläche |
| 15 | Biegekante | 45 | Befestigungsmittel |
| 16 | Greifersystem | 46 | Schlittensystem |
| 17 | erste Greifnut | 47 | horizontale Linearführung |
| 18 | zweite Greifnut | 48 | Führungsschiene |
| 19 | Aufnahmeabschnitt | 49 | Führungsschlitten |
| 20 | Zentrierausnehmung | 50 | Schienenaufnahme |
| 21 | erster Greifarm | 51 | Aktor |
| 22 | zweiter Greifarm | 52 | Pneumatikzylinder |
| 23 | erste Greifarmaufnahme | 53 | Einsetzstellung |
| 24 | zweite Greifarmaufnahme | 54 | Ruhestellung |
| 25 | erster Aktuator | 55 | vertikale Linearführung |
| 26 | Klemmrichtung | 56 | Führungsschiene vertikal |
| 27 | Entriegelungsorgan | 57 | Führungsschlitten vertikal |
| 28 | Ausnehmung Greifarm | 58 | Schienenaufnahme vertikal |
| 29 | Greifabschnitt | 59 | Aktoraufnahme |
| 30 | vorderer Endabschnitt Greifarm | | |
| 60 | Zylinderrohr | | |
| 61 | Kolbenstange | | |
| 62 | Befestigungsaufnahme | | |
| 63 | weiterer Aktor | | |
| 64 | Positionierschlitten | | |
| 65 | Minimalstellung | | |
| 66 | Maximalstellung | | |
| 67 | Schienenaufnahme Positionierschlitten | | |
| 68 | Führungsschiene Positionierschlitten | | |
| 69 | Sperrmechanismus | | |
| 70 | weitere horizontale Linearführung | | |
| 71 | Sperrzapfen | | |
| 72 | Stirnfläche | | |
| 73 | gezahnte Oberfläche | | |
| 74 | Zahnleiste | | |
| 75 | Sperrzylinder | | |
| 76 | Zahnrad | | |
| 77 | Zahnleiste | | |
| 78 | Betätigungselement | | |
| 79 | Riegelelement | | |

## Patentansprüche

1. Greifersystem (16) für eine Abkantpresse (2) mit einer Greifvorrichtung (11) zum Manipulieren eines Biegewerkzeuges (6), die Greifvorrichtung (11) umfassend einen ersten Greifarm (21) und einen in Klemmrichtung (26) relativ zum ersten Greifarm (21) verschiebbaren zweiten Greifarm (22), welche Greifarme (21) zum Eingreifen in eine Greifnut (17, 18) eines Biegewerkzeuges (6) und zum Klemmen des Biegewerkzeuges (6) ausgebildet sind, wobei die Greifvorrichtung (11) an einem Schlittensystem (46) angeordnet ist, welches Schlittensystem (46) eine horizontale Linearführung (47) umfasst, mittels welcher die Greifvorrichtung (11) in Längsrichtung (35) der Greifarme (21, 22) zur Greifnut (17, 18) hin oder von der Greifnut (17, 18) weg verschiebbar ist und dass das Schlittensystem (46) eine vertikale Linearführung (55) umfasst an welcher die horizontale Linearführung (47) mit der daran angeordneten Greifvorrichtung (11) vertikal verschiebbar angeordnet ist, **dadurch gekennzeichnet, dass** die horizontale Linearführung (47) einen auf einer Führungsschiene (48) geführten Führungsschlitten (49) umfasst, auf welchem die Greifvorrichtung (11) aufgenommen ist, wobei der Führungsschlitten (49) mittels einem Pneumatikzylinder (52) zwischen einer ausgeschobenen Einsetzstellung (53) und einer zurückgezogenen Ruhestellung (54) positionierbar ist, wobei zwischen der Führungsschiene (48) und dem Pneumatikzylinder (52) ein weiterer Aktor (63) angeordnet ist mittels welchem der Pneumatikzylinder (52) verschiebbar ist und somit die ausgeschobene Einsetzstellung (53) des Pneumatikzylinders (52) variierbar ist.

2. Greifersystem nach Anspruch 1, **dadurch gekennzeichnet, dass** an der vertikalen Linearführung (55) zwei der horizontalen Linearführungen (47) angeordnet sind, an welchen jeweils eine Greifvorrichtung (11) ausgebildet ist.

3. Greifersystem nach Anspruch 1 oder 2, **dadurch gekennzeichnet, dass** die vertikale Linearführung (55) an einer weiteren horizontalen Linearführung (70) angeordnet ist, mittels welcher die Greifvorrichtung (11) in horizontaler Verschieberichtung (13) einer Werkzeugaufnahme (5) der Abkantpresse (2) verschiebbar ist.

4. Greifersystem nach einem der vorhergehenden Ansprüche, **dadurch gekennzeichnet, dass** ein Zylinderrohr (60) des Pneumatikzylinders (52) mit der Führungsschiene (48) gekoppelt ist und dass eine Kolbenstange (61) des Pneumatikzylinders (52) mit dem Führungsschlitten (49) gekoppelt ist.

5. Greifersystem nach einem der vorhergehenden Ansprüche, **dadurch gekennzeichnet, dass** das Zylinderrohr (60) des Pneumatikzylinders (52) an einem Positionierschlitten (64) angeordnet ist, welcher mittels dem weiteren Aktor (63) horizontal relativ zur vertikalen Linearführung (55) verschiebbar ist.

6. Greifersystem nach Anspruch einem der vorhergehenden Ansprüche, **dadurch gekennzeichnet, dass** der weitere Aktor (63) als Stellmotor ausgebildet ist, welcher stufenlos zwischen einer Minimalstellung (65) und einer Maximalstellung (66) verschiebbar ist.

7. Greifersystem nach einem der vorhergehenden Ansprüche, **dadurch gekennzeichnet, dass** ein Sperrmechanismus (69) ausgebildet ist, mittels welchem die Position des Zylinderrohres (60) des Pneumatikzylinders (52), welche mittels dem weiteren Aktor (63) einstellbar ist, fixierbar ist.

8. Greifersystem nach Anspruch 7, **dadurch gekennzeichnet, dass** der Sperrmechanismus (69) einen Sperrzapfen (71) umfasst, welcher mittels einem Sperrzylinder (75) verschiebbar ist, wobei der Sperrzapfen (71) an dessen Stirnfläche (72) eine gezahnte Oberfläche (73) aufweist und mit einer Zahnleiste (74) zusammenwirkt, wobei im ausgefahrenen Zustand des Sperrzylinders (75) die gezahnte Oberfläche (73) in die Zahnleiste (74) eingreift.

9. Biegepresse, insbesondere Abkantpresse (2), mit Pressbalken (4, 7) sowie an den Pressbalken (4, 7) angeordneten bzw. ausgebildeten Werkzeugaufnahmen (5) mit darin aufgenommenen Biegewerkzeugen (6), wobei die Biegewerkzeuge (6) eine Greifnut (17, 18) aufweisen und mittels einem Greifersystem (16) manipulierbar sind, **dadurch gekennzeichnet, dass** das Greifersystem (16) nach einem der vorhergehenden Ansprüche ausgebildet ist.

## Claims

1. A gripping system (16) for a press brake (2) having a gripping device (11) for manipulating a bending tool (6), the gripping device (11) comprising a first gripping arm (21) and a second gripping arm (22) that is displaceable in the clamping direction (26) relative to the first gripping arm (21), said gripping arms (21) being configured to engage in a gripping groove (17, 18) of a bending tool (6) and to clamp the bending tool (6), and the gripping device (11) is arranged on a carriage system (46), said carriage system (46) comprising a horizontal linear guide (47) by means of which the gripping device (11) is displaceable towards the gripping groove (17, 18) or away from the gripping groove (17, 18) in the longitudinal direction (35) of the gripping arms (21, 22) and the carriage system (46) comprises a vertical linear guide (55) on which the horizontal linear guide (47) with the gripping device (11) arranged thereon is disposed so as to be vertically displaceable, **characterized in that** the horizontal linear guide (47) comprises a guide carriage (49) guided on a guide rail (48) on which the gripping device (11) is received, wherein the guide carriage (49) can be positioned by means of a pneumatic cylinder (52), between an extended insertion position (53) and a retracted rest position (54), wherein a further actuator (63) is disposed between the guide rail (48) and the pneumatic cylinder (52) by means of which the pneumatic cylinder (52) can be moved and the extended insertion position (53) of the pneumatic cylinder (52) can thus be varied.

2. The gripping system according to claim 1, **characterized in that** two of the horizontal linear guides (47) are disposed on the vertical linear guide (55), each of which is provided with a gripping device (11).

3. The gripping system according to claim 1 or 2, **characterized in that** the vertical linear guide (55) is disposed on a further horizontal linear guide (70) by means of which the gripping device (11) can be moved in the horizontal direction of movement (13) of a tool holder (5) of the press brake (2).

4. The gripping system according to one of the preceding claims, **characterized in that** a cylinder tube (60) of the pneumatic cylinder (52) is coupled with the guide rail (48) and a piston rod (61) of the pneumatic cylinder (52) is coupled with the guide carriage (49).

5. The gripping system according to one of the preceding claims, **characterized in that** the cylinder tube (60) of the pneumatic cylinder (52) is disposed on a positioning carriage (64) which can be moved horizontally relative to the vertical linear guide (55) by means of the further actuator (63).

6. The gripping system according to one of the preceding claims, **characterized in that** the further actuator (63) is provided in the form of a servomotor which can be steplessly displaced between a minimum position (65) and a maximum position (66).

7. The gripping system according to one of the preceding claims, **characterized in that** a locking mechanism (69) is provided by means of which the position of the cylinder tube (60) of the pneumatic cylinder (52), which can be set by means of the further actuator (63), can be fixed.

8. The gripping system according to claim 7, **characterized in that** the locking mechanism (69) comprises a locking pin (71) which can be moved by means of a locking cylinder (75), wherein the locking pin (71) has a toothed surface (73) on its end face (72) and cooperates with a toothed rack (74), wherein when the locking cylinder (75) is in the extracted state, the toothed surface (73) engages in the toothed rack (74).

9. A bending press, in particular a press brake (2), having press beams (4, 7) and tool holders (5) with bending tools (6) received therein disposed and/or arranged on the press beams (4, 7), wherein the bending tools (6) have a gripping groove (17, 18) and can be manipulated by means of a gripping system (16), **characterized in that** the gripping system (16) is configured according to one of the preceding claims.

## Revendications

1. Système de préhension (16) pour une presse plieuse (2), avec un dispositif de préhension (11) pour la manipulation d'un outil de pliage (6), le dispositif de préhension (11) comprenant un premier bras de préhension (21) et un deuxième bras de préhension (22) mobile par rapport au premier bras de préhension (21) dans la direction de serrage (26), ces bras de préhension (21) étant conçus pour l'emboîtement dans une rainure de préhension (17, 18) d'un outil de pliage (6) et pour le serrage de l'outil de pliage (6), le dispositif de préhension (11) étant disposé sur un système de chariot (46), ce système de chariot (46) comprenant un guidage linéaire horizontal (47), au moyen duquel le dispositif de préhension (11) peut être déplacé dans la direction longitudinale (35) des bras de préhension (21, 22), avec un mouvement de va-et-vient en direction de la rainure de préhension (17, 18) ou loin de la rainure de préhension (17, 18) et le système de chariot (46) comprend un guidage linéaire vertical (55) sur lequel le guidage linéaire horizontal (47), avec le dispositif de préhension (11) qui y est disposé, est disposé de manière mobile, **caractérisé en ce que** le guidage linéaire horizontal (47) comprend un chariot de guidage (49) guidé sur un rail de guidage (48), sur lequel le dispositif de préhension (11) est logé, le chariot de guidage (49) pouvant être positionné au moyen d'un vérin pneumatique (52) entre une position d'utilisation sortie (53) et une position de repos rentrée (54), moyennant quoi, entre le rail de guidage (48) et le vérin pneumatique (52), est disposé un autre actionneur (63), au moyen duquel le vérin pneumatique (52) peut être déplacé et donc la position d'utilisation sortie (53) du vérin pneumatique (52) peut être modifiée.

2. Système de préhension selon la revendication 1, **caractérisé en ce que**, sur le guidage linéaire vertical (55) sont disposés deux des guidages linéaires horizontaux (47) sur lesquels est réalisé un dispositif de préhension (11).

3. Système de préhension selon la revendication 1 ou 2, **caractérisé en ce que** le guidage linéaire vertical (55) est disposé sur un autre guidage linéaire horizontal (70) au moyen duquel le dispositif de préhension (11) peut être déplacé dans la direction de déplacement horizontale (13) d'un porte-outil (5) de la presse plieuse (2).

4. Système de préhension selon l'une des revendications précédentes, **caractérisé en ce qu'**un tube cylindrique (60) du vérin pneumatique (52) est couplé avec le rail de guidage (48) et **en ce qu'**une tige de piston (61) du vérin pneumatique (52) est couplée avec le chariot de guidage (49).

5. Système de préhension selon l'une des revendications précédentes, **caractérisé en ce que** le tube cylindrique (60) du vérin pneumatique (52) est disposé sur un chariot de positionnement (64) qui peut être déplacé au moyen de l'autre actionneur (63) de manière horizontale par rapport au guidage linéaire vertical (55).

6. Système de préhension selon l'une des revendications précédentes, **caractérisé en ce que** l'autre actionneur (63) est conçue comme un moteur pas-à-pas qui peut être déplacé de manière progressive entre une position minimale (65) et une position maximale (66).

7. Système de préhension selon l'une des revendications précédentes, **caractérisé en ce qu'**un mécanisme de blocage (69) est prévu, au moyen duquel la position du tube cylindrique (60) du vérin pneumatique (52),qui peut être réglée au moyen de l'autre actionneur (63), peut être fixée.

8. Système de préhension selon la revendication 7, **caractérisé en ce que** le mécanisme de blocage (69) comprend un tenon de blocage (71) qui peut être déplacé au moyen d'un vérin de blocage (75), le tenon de blocage (71) comprenant, au niveau de sa face frontale (72), une surface dentée (73) et interagissant avec une crémaillère (74), moyennant quoi, dans l'état sorti du vérin de blocage (75), la surface dentée (73) s'emboîtant dans la crémaillère (74).

9. Presse de pliage, plus particulièrement presse plieuse (2), avec des barres de presse (4, 7) ainsi que des porte-outils (5) disposés ou réalisés sur les barres de presse (4, 7), avec des outils de pliage (6) logés à l'intérieur, les outils de pliage (6) comprenant une rainure de préhension (17, 18) et pouvant être manipulés au moyen d'un système de préhension (16), **caractérisée en ce que** le système de préhension (16) est conçu selon l'une des revendications précédentes.
